Europäisches Patentamt

European Patent Office

Office européen des brevets

(11) Publication number: **0 194 063**
A2

# (12) EUROPEAN PATENT APPLICATION

(21) Application number: **86301070.8**

(22) Date of filing: **17.02.86**

(51) Int. Cl.⁴: **G 01 S  13/86,** G 01 S  13/66
  // H04B1/04

(30) Priority: **18.02.85  GB 8504134**

(43) Date of publication of application: **10.09.86**
**Bulletin 86/37**

(84) Designated Contracting States: **DE FR GB**

(71) Applicant: **PLESSEY OVERSEAS LIMITED, Vicarage Lane, Ilford Essex IGl 4AQ (GB)**

(72) Inventor: **Cheer, Eric Ronald, 15 Hillsboro Road, Bognor Regis West Sussex (GB)**

(74) Representative: **Sorenti, Gino et al, Intellectual Property Department The Plessey Company plc 2-60 Vicarage Lane, Ilford Essex IG1 4AQ (GB)**

(54) **Tracking transmitter with two operational modes.**

(57)  A transmitter for target tracking, the transmitter compries a transmit mode and a standby mode, a movement sensor for detecting movement of a target to be tracked, and a trigger circuit, responsive to the movement sensor, for selecting the transmit mode or standby mode for the transmitter.

In a preferred embodiment a pulse generator for generating standby confidence pulses and the transmitter is arranged such that a standby confidence pulse is transmitted periodically when the transmitter is selected to operate in the standby mode for indicating to a tracking receiver that the transmitter is operational.

ACTORUM AG

0194063

# IMPROVEMENTS IN OR RELATING TO TRANSMITTERS

The present invention relates to improvements in or relating to transmitters and in particular to transmitters used for target tracking purposes.

Transmitters designed for target tracking are frequently powered by internal batteries. In order to minimise the physical size of the transmitter, the smallest physical size batteries are desirable as a power source. To provide an acceptable operating life from minimal size batteries the mean power drain of the transmitter must be commensurate with the power stored in such batteries. However, to achieve a useful operating range the highest possible transmitter power is desirable.

Target tracking transmitters are frequently deployed for a considerable period of time before they may be used to actually track a target. Since transmission is required only when the target moves, transmission during lengthy periods when the target is stationary is wasteful of battery power. Hence, the power stored in the internal battery can be conserved by adopting a low power standby mode when the target to be tracked is stationary but adopting a higher power transmission mode when the target moves.

It is an object of the present invention to provide a target tracking transmitter having the above modes of operation.

Accordingly, there is provided a transmitter for target tracking, the transmitter comprising a transmit mode and a standby mode, a movement sensor for detecting movement of a target to be tracked, and a trigger circuit, responsive to the movement sensor, for selecting the transmit mode or standby mode for the transmitter.

Preferably, the transmitter is arranged to select and maintain the transmit mode in response to the movement detector detecting movement of the target to be tracked.

The transmitter may include delay means for maintaining the transmitter in the transmit mode for a predetermined period of time after the movement sensor has sensed no movement of the target to be tracked.

The standby mode preferably comprises a low-duty ratio operating mode and the transmitter may include a pulse generator for generating standby confidence pulses and the transmitter is arranged such that a standby confidence pulse is transmitted periodically when the standby mode is selected so as to indicate to a tracking receiver that the transmitter is operational.

Advantageously, the movement detector comprises an accelerometer, preferably of the piezoelectric type, which may include filtering to tailor the response thereof.

The present invention will now be described, by way of example, with reference to the accompanying drawings in which:

Figure 1 illustrates a schematic block diagram of a target tracking transmitter in accordance with the present invention; and

Figure 2 illustrates a schematic block diagram of a preferred embodiment of the target tracking transmitter shown in Figure 1.

Referring to the drawings, a target tracking transmitter 2 comprises a movement sensor 4 coupled to a transmitter 6 via a trigger circuit 8 and operates from an internal power source, such as a battery (not shown).

In use, the target tracking transmitter 2 is deployed on or in relation to a target to be tracked. However, as previously stated, the transmitter may be deployed for a considerable period of time, for example several days, before any movement of the target occurs. So as to conserve battery power during this static period the target tracking transmitter 2 is provided with two modes of operation; namely a transmit mode and a standby mode.

In operation the movement sensor 4 detects when any movement of the target to be tracked occurs and provides a signal to the trigger circuit 8. In response to the detected movement, the trigger circuit 8 is actuated and, in a preferred form, the transmit mode is selected and the transmitter 6 is enabled. When the movement sensor 4 detects that the target is stationary the standby mode is selected and the transmitter 6 is disabled. It can be seen, therefore, that appreciable conservation of battery power may be achieved as the target transmitter 2 only transmits a signal to a tracking receiver when the target to be tracked is on the move. Various movement sensors may be used in the target tracking receiver but a preferred type is an accelerometer which can monitor vibration in addition to actual target movement.

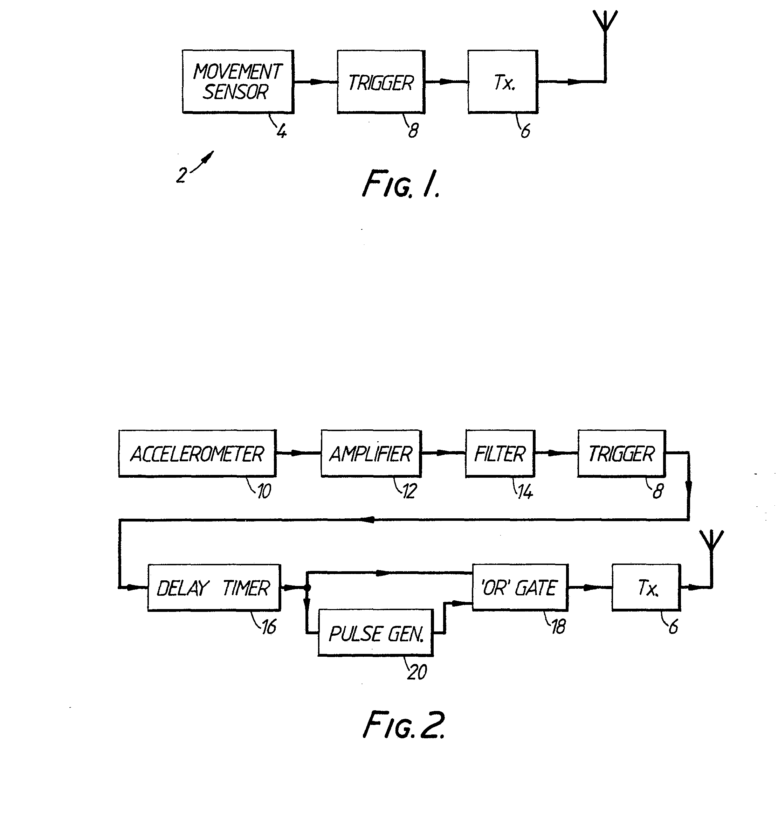

Referring now to Figure 2, there is shown an improved form of target racking transmitter in which the movement sensor comprises an accelerometer 10, preferably of the piezoelectric type coupled via an amplifier 12 and filter 14 to the trigger circuit 8.

The trigger circuit is coupled via delay means such as a delay timer 16 and OR gate 18 to the transmitter 6. A pulse generator 20 is provided in parallel to the coupling between the delay timer 16 and OR gate 18. The pulse generator 20 is used to generate standby confidence pulses, the function of which will become apparent from the following description.

When movement of the target to be tracked is detected by the accelerometer 10 the output signal therefrom is amplified by the amplifier 12 and filtered by the filter 14; the filter 14 functioning to tailor the response of the accelerometer to the type of movement expected of the target thereby improving tracking reliability. This amplified and filtered signal is used to actuate the trigger circuit 8 which is of the self-resetting type and thus provides a continuous output signal as long as target movement is detected by the accelerometer 10. The output signal from the trigger circuit 8 actuates the delay timer 16, which continues to provide a signal to the transmitter 6 via the OR gate 18, and hence maintain the transmitter in the transmit mode, for a predetermined period of time after the accelerometer has ceased to detect movement of the target. In this manner, the transmitter is arranged to revert to a standby mode, after being in the transmit mode, only after the target has been detected as being stationary for longer than the time period as set by the delay timer 16, which may be up to several minutes duration. Such a transmitter enables much of the battery economy benefits to be maintained even with a target which moves intermittently and also provides a 'hold-over' period for the tracking receiver to locate a static position of the target before the transmitter reselects the standby mode. In the standby mode, the pulse generator 20 is used to generate standby confidence pulses which are afforded via the OR gate 18 to the transmitter 6. These standby pulses enable the transmitter to adopt a very low duty ratio of transmission in the standby mode; that is the time period for which the transmitter is enabled (as determined by the duration of the standby confidence pulses) is relatively short in comparison to the time period for which the transmitter is disabled. The standby confidence pulses are transmitted periodically during any period in which the standby mode is selected and may be transmitted on a radius or regular period basis, such as, typically 1 second every few minutes. These confidence pulses serve to indicate to a tracking receiver that the transmitter is still operational and are particularly advantageous during relatively long periods when the target remains stationary.

It can be seen therefore, that a target tracking transmitter in accordance with the invention enables a target to be tracked as required but enables greatly enhanced battery power retention when compared to known designs of target tracking transmitters.

Although the present invention has been described with respect to a specific embodiment it should be appreciated that modifications may be effected whilst remaining within the scope of the invention.

CLAIMS:

1.    A transmitter for target tracking, the transmitter comprising a transmit mode and a standby mode, a movement sensor for detecting movement of a target to be tracked, and a trigger circuit, responsive to the movement sensor, for selecting the transmit mode or standby mode for the transmitter.

2.    A transmitter according to claim 1 wherein the transmitter is arranged to select and maintain the transmit mode in response to the movement detector detecting movement of the target to be tracked.

3.    A transmitter according to claim 1 or claim 2 further comprising delay means for maintaining the transmitter in the transmit mode for a predetermined period of time after the movement sensor has detected no movement of the target to be tracked.

4.    A transmitter according to any one of claims 1 to 3 wherein the standby mode comprises a low-duty ratio operating mode.

5.    A transmitter according to claim 4 further comprising a pulse generator for generating standby confidence pulses and the transmitter is arranged such that a standby confidence pulse is transmitted periodically when the transmitter is selected to operate in the standby mode for indicating to a tracking receiver that the transmitter is operational.

6. A transmitter according to any one of the preceding claims wherein the movement detector comprises an accelerometer.

7. A transmitter according to claim 6 wherein the accelerometer comprises a piezoelectric accelerometer further comprising electronic filter means for tailoring the response of the accelerometer to target movement.

0194063

1/1

Fig. 1.

Fig. 2.